# EUROPEAN PATENT APPLICATION

(11) **EP 4 831 479 A1**
(43) Date of publication of application: **28.10.2026**
(21) Application number: 26173875.1
(22) Date of filing: 22.04.2026
(51) Int. Cl.: F03D 9/32, F03D 1/02

(54) **AEROSTATIC WIND GENERATOR**

(30) Priority: 22.04.2025 IT 202500009012
(71) Applicant: Meks Consult Srl, 62100 Macerata (IT)
(72) Inventor: BOLDRINI, Paolo, 62024 MATELICA (MC) (IT)
(74) Representative: Baldi, Claudio

(57) **Abstract**

An aerostatic wind generator (100) comprises: an aerostatic balloon (1) comprising an enclosure (1a) filled with a gas lighter than air; a plurality of wind turbines (5) with horizontal axis arranged side by side on the aerostatic balloon (1); anchoring means (2) for anchoring the aerostatic ballon (1) to the ground; an adjustment system (4) connected to the aerostatic ballon (1), for adjusting the position of the aerostatic ballon based on wind speed and direction; a connection system (3) connecting the anchoring means (2) to the adjustment system (4); power transmission means (7) for transmitting the electrical energy produced by the wind turbines of the aerostatic generator to a power grid.

## Description

The present invention relates to an aerostatic wind generator.

The present invention falls within the field of renewable energy resources and particularly refers to the generation of electrical energy from wind power.

The use of renewable energy resources continues to be an important factor in order to meet the energy demand while substantially reducing environmental impacts. For example, technologies that employ solar, hydroelectric, and wind energy continue to decrease in cost and increase in efficiency, eliminating the negative environmental impacts.

Wind energy is an essential renewable source for the energy transition. Wind turbines comprising various interconnected components that work together to convert the wind kinetic energy into electrical energy are known. Precisely for such a reason, in order to withstand the oscillations and vibrations caused by the wind pressure, the structure of the wind turbine must be anchored to the ground by means of foundations that are very often completely buried and made of reinforced concrete.

Each wind turbine comprises a tower that supports a rotor and a nacelle at the top. Blades are attached to the rotor. There are also rotors equipped with adjustable blades that can vary their inclination based on the wind speed, thereby ensuring a constant level of electricity production.

The nacelle is a cabin that houses the various components of the wind turbine, including a gearbox and a generator suitable for converting the mechanical energy into electrical energy. In particular, the gearbox is responsible for converting the slow rotation of the rotor blades into a faster rotation that is suitable for operating the electric generator. In fact, the rotor blades rotate at relatively low speeds, typically between 10 and 20 revolutions per minute (RPM). However, electric generators require a much higher rotational speed, often between 1,000 and 1,500 revolutions per minute. The revolutions per minute of the wind turbine, and consequently the frequency of the electricity produced, are highly variable due to variability of the wind speed; however, the grid frequency must remain constant at 50 Hz. Therefore, the generators are connected to a set of inverters before feeding the energy into the grid.

The rotor is driven in motion by the wind and transmits its rotation to the gearbox. The gearbox transforms the slow rotation of the blades into a faster rotation in order to operate the generator. The electric generator converts the mechanical energy into electrical energy and, thanks to the inverter system, transfers the electrical energy to the grid.

The towers of the wind turbines are very tall, generally ranging from 80 to 115 meters in height. The main advantage of having a very tall tower lies in the fact that, as the elevation above the ground increases gradually, winds become stronger and more consistent. The energy available in a wind of a given magnitude significantly increases when the wind speed increases, with gains proportional to the cube of the airflow speed. Although the lower air pressures at higher altitudes reduce the wind energy, there is a height range that extends approximately up to an altitude of one kilometer, in which such a reduction is largely exceeded by the increase related to the wind speed.

It must be noted, however, that the cost of constructing a tower increases in a non-linear way with the height of the tower because as the tower becomes taller, also its structure must become stronger and heavier in order to adequately withstand the oscillations and vibrations caused by the wind pressure. By way of example, doubling the height of a tower may result in a fourfold increase in the total construction cost. As a result, the construction of such a tower-mounted wind turbine is extremely expensive, to the point that certain wind generation altitudes that would increase the efficiency of the wind turbine become economically unfeasible.

In order to reach very high altitudes that cannot be reached with tower-mounted wind turbines, high-altitude wind power generation systems are known, which employ drone-mounted wind turbines or aerostats. An aerostat is a specific type of aircraft that gains lift through based on Archimedes' principle. In fact, the aerostat consists of an enclosure filled with a gas lighter than air, such as hydrogen, helium, or another gas. The aerostat can be either tethered, that is to say anchored to the ground so that its position in the air is nearly stationary, or free-flying. If the aerostat is tethered, it is secured to the ground by means of a cable that serves as anchor for the rotor and as system for transferring the electricity generated at high altitude to the power grid. Compared to traditional tower-mounted wind turbines, aerostats have lower costs. In fact, unlike the non-linear cost effects observed when the height of a tower is increased, the cost of extending a flexible cable increases approximately in proportion to its length. Furthermore, the fact that aerostats can reach very high altitudes with respect to the ground level means that stronger and more consistent winds can operate the rotor blades of the aerostat. Consequently, with the same dimension of the blades of the wind turbine, the aerostat can produce a greater amount of energy than a tower-mounted wind turbine.

Nevertheless, aerostats are impaired by certain drawbacks. Firstly, the aerostats according to the prior art have numerous piloting difficulties and generally require the use of ground-based pivoting systems to track the movements of the aerostat according to wind direction. Such pivoting systems are very bulky and expensive to build, inevitably increasing the overall cost of the aerostat. Furthermore, due to the high distance between the pivoting system and the aerostat, the aerostat assumes the position dictated by the pivoting system only after a certain time interval, reducing the efficiency of the aerostat. In fact, the misalignment between the aerostat and the wind direction causes a significant loss of airflow, resulting in reduced efficiency of the aerostat.

Finally, the aerostats of the prior art have high maintenance costs and are very complicated to install.

US2012/319407A1 describes a wind-based power generating system according to the preamble of claim 1.

US9321518B1 describes an aerial platform having a single ground anchoring point and a single cable that serves both for anchoring and power transmission. Furthermore, all generators are disposed under the aircraft.

EP3610152B2 describes a wind turbine comprising three generators arranged in a line and a power cable connected to a connecting cable for energy transportation. The connecting cable is the anchoring cable that is anchored at a single anchoring point.

DE102011100039A1 describes a wind power plant comprising two wind turbines that rotate two cables arranged in a loop to drive a rotor disposed on the ground that generates energy. Thus, the cables do not transport the electrical energy from the turbines to the ground.

The purpose of the present invention is to overcome the drawbacks of the prior art by providing an aerostatic wind generator characterized by high efficiency, making an optimal use of the airflow.

A further purpose of the present invention is to provide such an aerostatic wind generator that is economical and simple to manufacture.

These objectives are achieved in accordance with the invention with the features of the appended independent claims.

Advantageous embodiments of the invention are apparent from the dependent claims.

Further features of the invention will become clearer from the following detailed description, which refers to a purely illustrative and therefore non-limiting embodiment illustrated in the appended drawings, wherein:
Fig. 1 is a perspective view of the aerostatic wind generator according to the invention;
Fig. 1A is an enlargement of the detail enclosed in circle A of Fig. 1;
Fig. 2 is a side view of the aerostatic wind generator of Fig. 1;
Fig. 2A is an enlargement of the detail enclosed in circle A of Fig. 2;
Fig. 3 is a front view of the aerostatic wind generator of Fig. 1.

With the aid of the attached figures, an aerostatic wind generator according to the invention is described, which is referred to with numeral 100.

The aerostatic wind generator (100) comprises an aerostatic balloon (1) comprising an enclosure (1a) filled with a gas lighter than air, such as, for example, hydrogen, helium, or another gas.

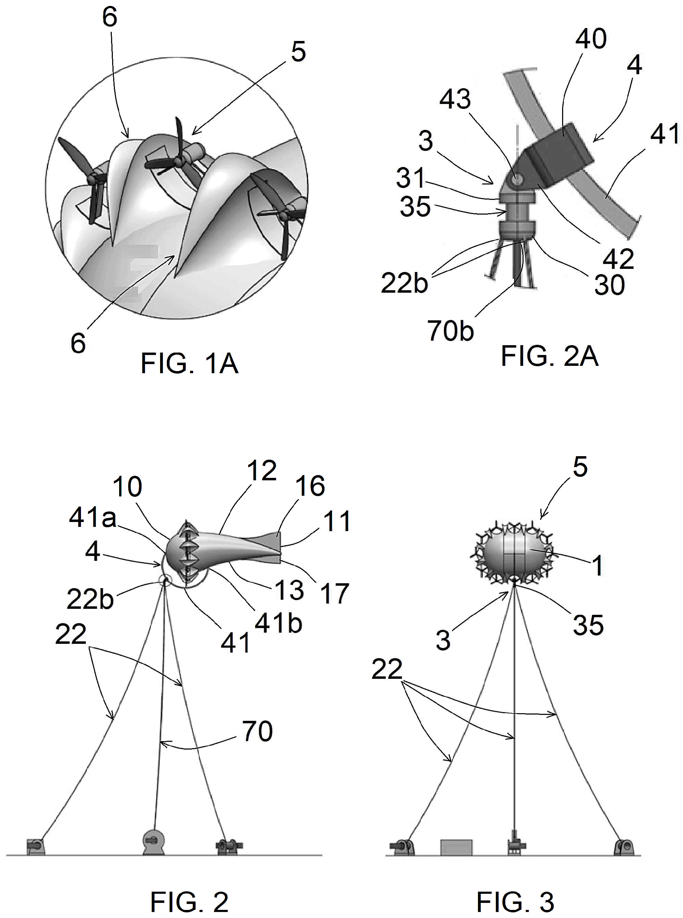

With reference to Fig. 2, the aerostatic balloon (1) has an airfoil profile in its longitudinal section. The airfoil profile has a leading edge (10) coinciding with a geometrically foremost line of the airfoil profile in terms of airflow interception, and a trailing edge (11) coinciding with a geometrically rearmost line of the airfoil profile in terms of airflow interception. The airfoil profile has an upper surface, or extrados (12), coinciding with the line that defines the airfoil profile at the top, and a lower surface, or intrados (13) , coinciding with the line that defines the airfoil profile at the bottom. Advantageously, such an airfoil profile is concave-convex, i.e., the intrados (13) is concave and the extrados (12) is convex.

An upper fin (16) and a lower fin (17) protrude respectively from the extrados (12) and the intrados (13) in the proximity of the trailing edge (11).

The leading edge (10) has a semi-cylindrical shape, whereas the trailing edge (11) has a pointed shape.

In particular, the leading edge (10), in longitudinal section, extends like a semicircle up to a portion of maximum cross-section (15). From the portion of maximum cross-section (15) to the trailing edge (11), the height of the longitudinal section of the airfoil profile decreases progressively.

The airfoil profile of the aerostatic balloon (1) generates two airflows, namely an upper, less dense airflow above the extrados (12), and a lower, denser airflow below the intrados (13). The result is a pressure difference, meaning that there is a low pressure above the extrados (12) and a high pressure below the intrados (13). Such a pressure difference creates an upward suction effect on the aerostatic ballon that contributes to increasing the upward thrust already provided by the aerostatic balloon.

The aerostatic wind generator (100) is of tethered type, i.e. it is anchored to the ground by means of anchoring means (2). Specifically, such anchoring means comprise winches (20) suitable for being fixed to the ground and connected to the aerostatic balloon (1) for raising and lowering the aerostatic balloon along a vertical axis (Z). The vertical axis (Z) is part of a set of three Cartesian axes comprising:
- a longitudinal axis (X) extending from the leading edge (10) to the trailing edge (11) of the aerostatic balloon; and
- a transverse axis (Y) extending from left to right.

The aerostatic wind generator (100) comprises:
- an adjustment system (4) connected to the aerostatic balloon (1) to adjust a position of the aerostatic balloon according to the wind speed and direction, and
- a connection system (3) connecting the anchoring means (2) to the adjustment system (4).

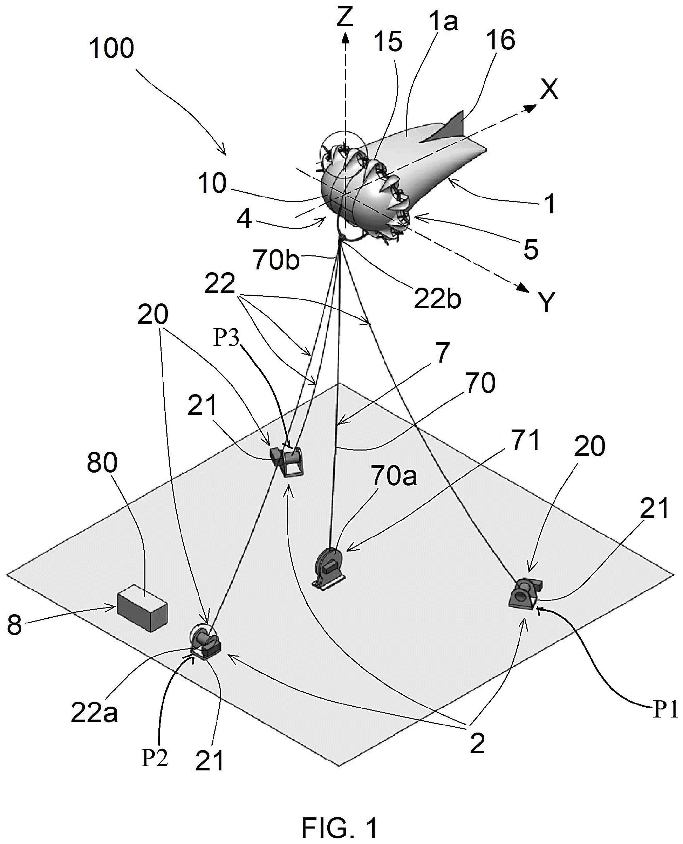

With reference to Fig. 1, the anchoring means (2) of the aerostatic wind generator (100) comprise at least three distinct and separate anchoring means that are anchored in at least three ground anchoring points (P1, P2, P3) arranged in different positions.

Each anchoring means (2) comprises a cable (22) that is anchored in a respective ground anchoring point (P1, P2, P3). Preferably, the at least three ground anchoring points (P1, P2, P3) are arranged along a circumference and angularly equidistant from one another. Fig. 1 shows three ground anchoring points (P1, P2, P3) angularly equidistant at 120°.

Advantageously, the ground anchoring means (2) comprise at least three winches (20) comprising the at least three ground anchoring points (P1, P2, P3). In the case of three winches (20), they are angularly spaced by an angle of 120°.

Each winch (20) comprises a drum (21) and a cable (22) having a first end (22a) fixed to the drum (21) and a second end (22b) connected to the connection system (3). Each winch (20) also comprises a motor (23) connected to the drum (21) so as to rotate the drum, thereby winding or unwinding the cable (22) around the drum (21) and, consequently, lowering or raising the aerostatic balloon (1).

In the case of the winches (20), the ground anchoring points (P1, P2, P3) are the drums (21) of the winches.

With reference to Figs. 2 and 2A, the adjustment system (4) comprises:
- a guide (41) fixed to the aerostatic balloon (1), and
- a carriage (40) sliding along the guide (41).

The guide (41) comprises an arc fixed to the aerostatic balloon (1) and lying on a plane passing through the longitudinal axis of the aerostatic balloon. In particular, such an arc has a first end (41a) fixed to the leading edge (10) of the aerostatic balloon, and a second end (41b) fixed to the intrados (13) of the aerostatic balloon. Such an arc defines a central angle of 200°-220°.

Alternatively, the guide (41) may comprise a ring fixed to the aerostatic balloon (1) and partially arranged inside the aerostatic ballon, so as to present a first arc arranged inside the aerostatic balloon and a second arc, explementary to the first arc, arranged outside the aerostatic balloon and slidably supporting the carriage (40). In such a case, the aerostatic balloon (1) comprises a channel through which the ring of the guide (41) passes.

Such an arc of the guide (41) may also take the form of any irregular curve approximating an arc shape. In fact, the arc of the guide (41) may be made of a particularly flexible material that, as such, deforms without assuming a precise shape of its own.

Drive means (not shown in the attached figures) are connected to the carriage (40) to move the carriage (40) along the guide (41). The drive means may comprise a gear-rack system, wherein the gear is driven by an electric motor, or a drive system with an electric actuator.

Thanks to the provision of such an adjustment system (4), it is possible to adjust the position of the aerostatic balloon (1) to the airflow speed, avoiding the pitch of the aerostatic balloon, i.e., an alternative vertical movement of the leading edge (10) and the trailing edge (11) of the aerostatic balloon. In fact, a variation in the airflow speed determines a modification in the balance between the upward thrust provided by the aerostatic balloon (1), the vertical load of the cables (22) of the winches (20), and the lift generated by the airfoil profile of the aerostatic balloon, causing a variation of the optimal position of the anchoring point of the aerostatic balloon.

Furthermore, the fact that such an adjustment system (4) is positioned at altitude and in proximity to the aerostatic balloon (1) ensures that the aerostatic balloon (1) assumes a position dictated by the adjustment system (4) without any delay in the transmission of motion, thereby maximizing the efficiency of the aerostatic wind generator.

The carriage (40) has a flange (42) that protrudes radially outward with respect to the guide (41).

With reference to Fig. 2A, the connection system (3) comprises a rotary joint (35) pivoted to the carriage (40) by means of a hinge (43) with axis parallel to the transverse axis (Y). The rotary joint (35) comprises a lower element (30), whereto the second ends (22b) of the cables (22) of the winches (20) are attached, and an upper element (31) hinged to the flange (42) of the carriage by means of the hinge (43). The lower element (30) rotates relative to the upper element (31) about the axis of the rotary joint that coincides with the vertical axis (Z), when the rotary joint is connected to the anchoring system. For such a purpose, rotary bearings are arranged between the lower element (30) and the upper element (31) of the rotary joint (35).

Advantageously, the lower element (30) and the upper element (31) are mutually movable along the vertical axis (Z). Damping elements are arranged between the lower element (30) and the upper element (31) to absorb the tensile and compressive forces imposed by the aerostatic balloon.

With reference to Figs. 1A and 3, the aerostatic wind generator (100) comprises a plurality of wind turbines with horizontal axis that are arranged side-by-side on the aerostatic balloon (1). The wind turbines are regularly spaced apart. Each wind turbine (5) comprises a vertical tower supporting a rotor and blades attached to the rotor.

The rotor is rotatably mounted in a stator equipped with electrical windings that are charged with electrical current during the rotation of the rotor.

The electrical windings of the stator of each wind turbine (5) are electrically connected to the guide (41) which contains elements made of conductive material. Also the carriage (40) and the rotary joint (35) contain elements made of conductive material.

Therefore, the electric current produced by the windings of the stator is transmitted to the rotary joint (35) through the guide (41) and the carriage (40), where the electrical energy produced by the wind turbines is thus conveyed.

Alternatively, the electric current produced by the windings of the stator may be transmitted to the rotary joint (35) by means of one or more multipolar electrical cables (not shown in the attached figures), with a freely-oscillating end section, so as to let the carriage (40) travel along the entire distance along the guide (41).

Preferably, the towers of the wind turbines are all of the same height. Advantageously, said wind turbines are arranged at the portion of maximum cross-section (15) of the airfoil profile of the aerostatic balloon (1) and protrude radially outward from said portion of maximum cross-section (15) of the airfoil profile.

Moreover, the number of the wind turbines (5) is an even number. A first half of the number of wind turbines comprises wind turbines with right-handed pitch blades, i.e., rotating in a clockwise direction, and a second half of the number of wind turbines comprises wind turbines with left-handed pitch blades, i.e., rotating in a counter-clockwise direction, so that a rotation of the blades of the wind turbines does not transfer any rotational motion to the aerostatic ballon (1).

The wind turbines are disposed in adjacent position around the portion of maximum cross-section (15) of the leading edge (10) of the aerostatic balloon (1), so as to protrude superiorly, laterally, and inferiorly relative to the leading edge (10), maximizing the available surface area.

The aerostatic wind generator (100) comprises a plurality of conveyors (6) arranged on the aerostatic balloon (1), such that each wind turbine (5) is located between two conveyors (6). In such a way, two adjacent conveyors form a channel wherein the airflow is conveyed and wherein one of the wind turbines is located.

The conveyors (6) comprise wings projecting outward from the enclosure (1a) of the aerostatic ballon. Each conveyor (6) has an arched profile and a maximum height greater than the height of the wind turbine towers, so that the wind turbine towers do not protrude above the conveyors (6). In such a way, when an airflow hits the leading edge (10) of the aerostatic balloon (1), it accelerates due to the airfoil profile of the aerostatic balloon until it reaches the conveyors (6), thereby undergoing an additional acceleration and reaching the wind turbines (5). As a result, it is possible to avoid a loss of airflow and maximize the power density of the wind turbines, as well as the efficiency of the aerostatic wind generator (100), thereby minimizing critical raw materials (CRM) and strategic raw materials (SRM) for the energy transition.

Advantageously, the aerostatic wind generator (100) comprises a monitoring and control system configured to manage the yaw and pitch of the aerostatic balloon. The monitoring and control system comprises accelerometers mounted on the aerostatic balloon (not shown in the attached figures) and is configured to adjust the current absorption of the wind turbines (5) that is differentiated based on the position of the wind turbines according to specific algorithms.

Returning to Fig. 1, the aerostatic wind generator (100) comprises power transfer means (7) for transferring the electrical energy produced by the wind turbines of the aerostatic wind generator to a power grid. The power transfer means (7) comprise an electrical cable (70) electrically connected to the rotary joint (35) and to an inverter (80) located in a substation (8) that is mounted on the ground under the aerostatic balloon. The inverter (80) converts the electrical energy produced by the wind turbines into alternating current (AC) electrical energy for being fed into a power grid.

The electrical cable (70) comprises a first end (70a) secured to a winder (71) suitable for being mounted on the ground, and a second end (70b) secured to the rotary joint (35) of the connection system (3). In turn, the winder (71) is electrically connected to the inverter (80) of the substation (8), so that the electrical energy produced by the wind turbines is fed into the power grid.

Advantageously, the electrical cable (70) is a multi-polar cable and comprises a first electrical cable for transferring the electrical energy to the power grid, and a second electrical cable for grounding any overvoltage generated by the wind turbines.

It should be noted that the anchoring means (2) are separate from the power transmission means (7).

The anchoring means (2) comprise at least three distinct and separate anchoring means anchored in at least three ground anchoring points (P1, P2, P3).

The wind turbines (5) are disposed in adjacent position around the portion of maximum cross-section (15) of the leading edge (10) of the aerostatic balloon (1), so as to protrude superiorly, laterally, and inferiorly with respect to the leading edge (10).

The three aforementioned characteristics provide the following advantages:
the ground anchoring means (2) are separate from the power transmission means (7) and allow for using standard components (such as anchoring cables and power transmission cables) that are already optimized for the required function and already comply with all applicable standards.

The ground anchoring means (2) comprise at least three distinct and separate anchoring means anchored in at least three ground-anchoring points (P1, P2, P3) and ensure a stable positioning of the aerostatic ballon (1), actively controlling it by means of an independent operation of each of the three anchoring means even in the presence of variations in the wind direction and speed.

It must be noted that the aerodynamic shape of the leading edge (10) tends to peripherally push the airflow generated by the wind that hits the leading edge (10), reaching its maximum speed, precisely at the portion of maximum cross-section (15) of the leading edge.

Therefore, the wind turbines (5) disposed in adjacent position around the portion of maximum cross-section (15) of the leading edge (10) of the aerostatic balloon (1), protruding superiorly, laterally, and inferiorly with respect to the leading edge (10), allow for the processing of an airflow driven from the leading edge (10) at a higher speed than what would occur if the wind turbines were arranged in a different position.

Numerous variations and detailed modifications may be made to the present embodiment of the invention, within the reach of a person skilled in the art, while still falling within the scope of the invention as expressed by the appended claims.

## Claims

1. Aerostatic wind generator (100) comprising:
- an aerostatic balloon (1) comprising an enclosure (1a) filled with a gas lighter than air; said aerostatic balloon (1) having a longitudinal axis (X),
- a plurality of wind turbines (5) arranged on the aerostatic balloon (1),
- anchoring means (2) for anchoring the aerostatic balloon (1) to the ground,
- an adjustment system (4) connected to the aerostatic balloon (1) and configured to adjust an inclination of the longitudinal axis (X) of the aerostatic balloon based on the wind speed and direction,
- a connection system (3) connecting the anchoring means (2) with the adjustment system (4), and
- power transmission means (7) configured to transmit the electrical energy produced by the wind turbines (5) of the aerostatic wind generator to a power grid;
**characterized in that**
the anchoring means (2) are separate from the power transmission means (7);
the anchoring means (2) comprise at least three distinct and separate anchoring means that are anchored in at least three ground-anchoring points (P1, P2, P3) arranged in different positions; and
the wind turbines (5) are disposed in adjacent position around a portion of maximum cross-section (15) of a leading edge (10) of the aerostatic ballon (1), so as to protrude above, laterally and below the leading edge (10).

2. The aerostatic wind generator (100) according to claim 1, wherein said ground-anchoring means (2) comprise winches (20) suitable for being fixed to the ground and connected to the aerostatic balloon (1) for raising and lowering the aerostatic balloon along a vertical axis (Z); each winch (20) comprising a drum (21) and a cable (22) having a first end (22a) fixed to the drum (21) and a second end (22b) connected to the connection systems (3).

3. The aerostatic wind generator (100) according to claim 1 or 2, wherein said adjustment system (4) comprises:
- a guide (41) fixed to the aerostatic balloon (1) and comprising an arc fixed to the aerostatic balloon (1);
- a carriage (40) sliding along the guide (41), and
- drive means connected to the carriage (40) to move the carriage (40) along the guide (41).

4. The aerostatic wind generator (100) according to claim 3, wherein said arc of the guide (41) consists of flexible material.

5. The aerostatic wind generator (100) according to claim 3 or 4, wherein said arc of the guide (41) lies on a plane passing through the longitudinal axis (X) of the aerostatic balloon.

6. The aerostatic wind generator (100) according to claim 3, 4 or 5, when dependent on claim 2, wherein the connection system (3) comprises a rotary joint (35) pivoted to the carriage (40); said rotary joint (35) comprising an upper element (31) hinged to the carriage (40) of the adjustment system (4), and a lower element (30) whereto the cables (22) of the winches (20) are fixed; said lower element (30) being rotatable around said vertical axis (Z) with respect to the upper element (31).

7. The aerostatic wind generator (100) according to claim 6, wherein
the wind turbines (5) have a horizontal axis and each wind turbine (5) comprises a vertical tower supporting a rotor and blades fixed to the rotor; the rotor of each wind turbine (5) being rotatably mounted in a stator equipped with electrical windings that are charged with electrical current during the rotation of the rotor;
the guide (41) of the adjustment system (4) and the rotary joint (35) of the connection system (3) are made of a conductive material;
the electrical windings of the stator of each wind turbine (5) are electrically connected to the rotary joint (35); and
the power transmission means (7) comprise an electrical cable (70) electrically connected to the rotary joint (35) and to an inverter (80) that is arranged in a substation (8) suitable for being mounted on the ground and configured to convert the electricity produced by the wind turbines (5) into AC electricity suitable for being introduced into a power grid.

8. The aerostatic wind generator (100) according to any of the preceding claims, wherein said aerostatic wind generator (100) comprises a plurality of conveyors (6) arranged on the aerostatic balloon (1) so that each wind turbine (5) is located between two conveyors (6).

9. The aerostatic wind generator (100) according to claim 8, wherein said conveyors (6) comprise wings protruding outwardly from the enclosure (1a) of the aerostatic balloon; each conveyor (6) having an arched profile.

10. The aerostatic wind generator (100) according to any of the preceding claims, wherein said aerostatic wind generator (100) further comprises a monitoring and control system configured to manage the yaw and pitch of the aerostatic balloon (1); said monitoring and control system comprises accelerometers mounted on the aerostatic balloon and is configured to regulate the current absorption of the wind turbines (5).

11. The aerostatic wind generator (100) according to any of the preceding claims, wherein
said aerostatic balloon (1) has an airfoil profile in its longitudinal section, with said leading edge (10), coinciding with a geometrically foremost line of the airfoil profile in terms of airflow interception, and a trailing edge (11) coinciding with a geometrically rearmost line of the airfoil profile in terms of airflow interception;
the leading edge (10) of the airfoil profile of the aerostatic balloon (1) has a semi-cylindrical shape and the trailing edge (11) of the airfoil profile of the aerostatic balloon (1) has a pointed shape; and
the leading edge (10) extends in longitudinal section like a semicircle up to said portion of maximum cross-section (15) and the height of the longitudinal section of the airfoil profile progressively decreases from the portion of maximum cross-section (15) to the trailing edge (11).

12. The aerostatic wind generator (100) according to claim 11, wherein the wind turbines (5) are arranged at the portion of maximum cross-section (15) of the leading edge of the aerostatic balloon (1) and protrude radially from said portion of maximum cross-section (15) of the leading edge of the aerostatic balloon (1).

13. The aerostatic wind generator (100) according to claim 11 or 12, when depending on claim 3, wherein
the airfoil profile of the aerostatic balloon has an extrados (12) coinciding with a line that superiorly delimits the airfoil profile, and an intrados (13) coinciding with the line that inferiorly delimits the airfoil profile, and
said arc of the guide (41) has a first end (41a) fixed to the leading edge (10) of the aerostatic balloon, and a second end (41b) fixed to the intrados surface (13) of the aerostatic balloon; said arc of the guide defining a central angle of 200°-220°.

14. The aerostatic wind generator (100) according to any of claims 7 to 13, wherein
said power transmission means (7) further comprise a winder (71) suitable for being mounted on the ground and electrically connected to the inverter (80) of the substation (8); and
said electrical cable (70) comprises a first end (70a) fixed to the winder (71) and a second end (70b) fixed to the rotary joint (35) of the connection system (3).

15. The aerostatic wind generator (100) according to any of the preceding claims, wherein
the wind turbines (5) are in even number, are arranged side by side and are regularly spaced, and
a first half of the number of wind turbines comprises wind turbines with right-handed pitch, i.e. rotating in a clockwise direction, and a second half of the number of wind turbines comprises wind turbines with left-handed pitch, i.e. rotating in an anti-clockwise direction.
